# EUROPÄISCHE PATENTANMELDUNG

(11) **EP 0 976 538 A2**
(43) Veröffentlichungstag der Anmeldung: **02.02.2000**
(21) Anmeldenummer: 99112525.3
(22) Anmeldetag: 01.07.1999
(51) Int. Cl.: B29D 30/38, B29D 30/14, B29D 30/70, B60C 9/08, B60C 9/18, B29C 70/50

(54) **Verfahren zur Herstellung einer Verstärkungslage für einen Radialluftreifen, Verstärkungslage und Radialluftreifen**

(30) Priorität: 30.07.1998 DE 19834299
(71) Anmelder: Continental Aktiengesellschaft, 30165 Hannover (DE)
(72) Erfinder: Jenke, Roland, 29693 Hademstorf (DE)

(57) **Zusammenfassung**

Verfahren zur Herstellung einer Verstärkungslage für einen Radialluftreifen, bei der auf eine rohe Gummilage (4) Verstärkungsfäden, die aus einem Einzelfaden (3) gebildet werden, anhaftend aufgebracht werden. Gemäß der gegenständlichen Erfindung wird die Verstärkungslage derart erstellt, dass der Einzelfaden (3) durch ihn ergreifende Halte- und Führungseinrichtungen in entgegengesetzte Richtungen sukzessive auseinandergezogen wird, so dass ein Fadengebilde (3a) aus eng beabstandeten, zickzackförmig verlaufenden Verstärkungsfäden entsteht.

## Beschreibung

Die gegenständliche Erfindung betrifft ein Verfahren zur Herstellung einer Verstärkungslage für einen Radialluftreifen, wobei auf eine rohe Gummilage Verstärkungsfäden, die aus einem Einzelfaden gebildet werden, anhaftend aufgebracht werden. Die Erfindung betrifft ferner eine Verstärkungslage für einen Radialluftreifen sowie einen Radialluftreifen.

Es sind bereits Verfahren und Vorrichtungen bekannt, mit denen die Herstellung der Verstärkungslagen eines Reifens in den Aufbauvorgang des Reifens integriert werden kann. Die Verstärkungslagen werden daher direkt beim Aufbau des Reifens erstellt und nicht, wie es bei der sonst üblichen Reifenfertigung der Fall ist, durch Einsatz von Halbzeugen.

Die Herstellung solcher Halbzeuge, beispielsweise der Karkassenlage von PKW-Reifen, ist mit einem beträchtlichen Aufwand verbunden. So ist vor allem die für die Textilgummierung erforderliche Kalandereinrichtung aufwendig und teuer. Das Verfahren selbst ist ebenfalls arbeitsintensiv, da das eingesetzte Kordgewebe vorerst in einer Latexlösung imprägniert wird, anschließend in einer Trockenanlage bei höherer Temperatur getrocknet, am Kalander beidseitig mit einer Gummiplatte belegt und schließlich wieder zwischen Gewebemitläufern aufgerollt wird. Aus Gründen der Reifengleichförmigkeit müssen die Gummiplatten genau hergestellt werden und es muß ferner auch ein Biegeausgleich für die erfolgte Durchbiegung des Halbzeugs auf den Walzen erfolgen. Grundsätzlich ist diese Art der Verarbeitung von Reifenkord, der quer zum Kettfaden praktisch keinerlei Druckkräfte und nur sehr geringe Zugkräfte aufnehmen kann, relativ schwierig. Spezielle Einrichtungen müssen dafür sorgen, daß der Abstand der einzelnen Kettfäden konstant gehalten wird. Dies ist insbesondere im Randbereich nicht einfach, weil dort die Korde aufgrund der von den Schußfäden ausgeübten Zugspannungen zur Randverdichtung neigen.

Es ist daher verständlich, daß Lösungen, wo, wie oben erwähnt, die Verstärkungslagen direkt beim Aufbau des Reifens erstellt werden, einen beträchtlichen Fortschritt gegenüber der herkömmlichen Technik darstellen können. Ein Verfahren und eine Vorrichtung zum Herstellen einer Verstärkungslage, bei dem ein einzelner Verstärkungsfaden auf einen Kern aufgebracht wird, ist aus der EP 0 580 055 A1 bekannt. Der torusförmig gestaltete und starre Kern ist derart ausgeführt, daß er nach dem Aufbau des Reifens entfernt werden kann. Er besitzt eine äußere Oberfläche die die Geometrie der inneren Oberfläche des Reifens bestimmt. Auf diesen Kern wird vorerst der rohe Innenschichtgummi aufgebracht und anschließend eine Schicht aus Kalandriergummi, auf der der Faden haften soll. Der Verstärkungsfaden wird über eine Führungseinrichtung derart geführt, daß eine Aufwicklung des Fadens um den Kern, von einer Seite zur anderen Seite und wieder zurück erfolgt, so daß der Faden aneinander grenzende Bögen bildet. Andrückmittel sorgen für eine anhaftende Auflage des Fadens auf der am Kern befindlichen Gummischicht. Auf diese Weise entsteht aus einem einzelnen Faden eine Karkassenverstärkung.

Aus der DE 42 43 521 A1 ist es ferner bekannt, einen Reifen derart auszuführen, daß er felgenartige Halterungen mit Befestigungselementen für faden- oder bandförmige Verstärkungseinlagen zur Bildung der Karkasse aufweist. Diese Befestigungselemente sind insbesondere haken- oder ösenartig geformt und sind radial außen an der Halterung befestigt, so daß die Verstärkungseinlagen umlenkungsfrei von den Befestigungselementen aus in die neutrale Biegelinie der Reifenseitenwände übergehen sollen. Da die Halterungen mit den Befestigungselementen Bestandteile des Reifens bilden, wäre ein solcher Reifen nur mit beträchtlichem Aufwand herstellbar und es ist fraglich, ob ein solcher Reifen bezüglich der an ihn gestellten Anforderungen überhaupt entsprechen könnte.

Die Erfindung hat sich nun die Aufgabe gestellt, ein Verfahren zur Herstellung einer Verstärkungslage aus einem Einzelfaden vorzuschlagen, welches sowohl direkt beim Reifenaufbau angewendet werden kann, als auch die Herstellung einer Verstärkungslage ermöglicht, die als Halbzeug beim herkömmlichen Reifenaufbau eingesetzt werden kann. Dabei soll es sich um einfaches und ein mit einfachen Mitteln realisierbares Verfahren handeln.

Gelöst wird die gestellte Aufgabe erfindungsgemäß dadurch, daß der Einzelfaden durch eine Vielzahl von ihn ergreifenden Halteeinrichtungen in zwei entgegengesetzte Richtungen sukzessive auseinandergezogen wird, so daß ein Fadengebilde aus eng beabstandeten, zickzackförmig verlaufenden Verstärkungsfäden entsteht, welches mit der Gummilage verbunden wird.

Nach dem erfindungsgemäßen Verfahren wird daher an Stelle einer Hin- und Herbewegung bzw. eines Hin- und Herwickelns eines Einzelfadens, wie es etwa aus dem oben beschriebenen Stand der Technik bekannt ist, aus einem Einzelfaden vorab ein Fadengebilde erstellt, welches anschließend mit der Gummilage verbunden wird. Beim erfindungsgemäßen Verfahren können daher auch aufwendige, direkt beim Reifenaufbau einzusetzende Führungseinrichtungen für den Faden entfallen.

Bei einer besonders einfachen und zweckmäßigen Ausgestaltung der Halte- und Führungseinrichtungen ist vorgesehen, dass diese zwei Gurten, Riemen oder dergleichen aufweisen, die mit Haken, Ösen oder ähnlichem zum Erfassen des Fadens versehen sind.

Bei einer der möglichen Ausführungsformen der Erfindung wird nach dem erfindungsgemäßen Verfahren eine Verstärkungslage erstellt, die anschließend in herkömmlicher Art und Weise beim Reifenaufbau eingesetzt wird. Dabei gestaltet sich die Herstellung einer solchen Verstärkungslage dadurch einfach und rationell, wenn die mit dem Fadengebilde zu verbindende Gummilage von der einen Seite zugeführt und von der anderen Seite durch Andrückmittel mit dieser verbunden wird.

Bei einer zweiten Ausführungsform kann der Radialreifen auf einem Formkern aufgebaut werden, der, bevor das Fadengebilde aufgebracht wird, mit einer Gummilage versehen wird. Das Fadengebilde wird dabei insbesondere unter Spannung auf die Gummilage gelegt und dort angedrückt.

Die Halteeinrichtungen, die ja auch die Haken umfassen, können nun entweder bereits während oder erst nach Abschluß des Andrückens bzw. Verbindens des Fadengebildes mit der Gummilage entfernt werden. Dies kann durch eine entsprechende Führung der Gurten, Riemen oder dergleichen durchgeführt werden.

Es ist jedoch auch möglich, nach dem Andrücken bzw. Verbinden des Fadengebildes mit der Gummilage das Fadengebilde an den Rändern abzuschneiden.

Die gegenständliche Erfindung betrifft auch eine Verstärkungslage für einen Radialluftreifen, die nach dem erfindungsgemäßen Verfahren hergestellt ist und eine Gürtellage oder eine Karkassenlage sein kann. Gegenstand der Erfindung ist ferner auch ein Radialluftreifen, welcher zumindest eine gemäß dem erfindungsgemäßen Verfahren hergestellte oder erstellte Verstärkungslage aufweist, die entweder eine Gürtellage oder eine Karkassenlage ist.

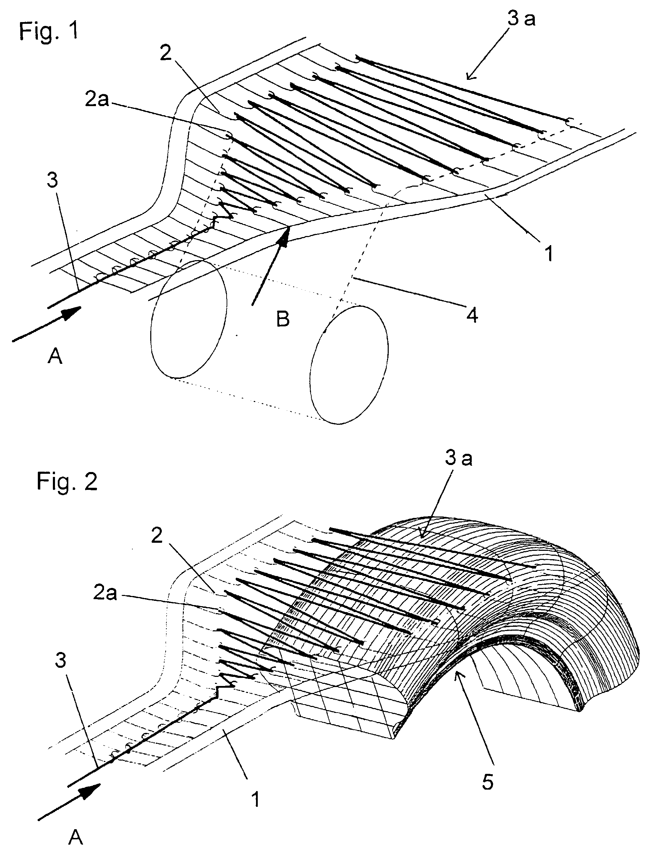

Weitere Merkmale, Vorteile und Einzelheiten der Erfindung werden nun anhand der Zeichnung, die zwei Ausführungsbeispiele darstellt, näher beschrieben. Dabei zeigt Fig. 1 anhand einer schematischen Darstellung die grundsätzliche Arbeitsweise des erfindungsgemäßen Verfahrens bei einer ersten Ausführungsform zur Erstellung einer Verstärkungslage für einen Fahrzeugluftreifen und Fig. 2 anhand einer ebenfalls schematischen Darstellung eine zweite Möglichkeit der Erstellung von Verstärkungslagen eines Fahrzeugluftreifens nach dem erfindungsgemäßen Verfahren.

Wie eingangs bereits dargelegt, geht es bei dem erfindungsgemäßen Verfahren insbesondere darum, eine Alternative zu den bislang bekannten Möglichkeiten des Aufbringens bzw. Herstellens einer Verstärkungslage für einen Radialluftreifen vorzuschlagen. Die erfindungsgemäß vorgeschlagene Lösung gestattet es nun, ausgehend von einem einzelnen Faden entweder eine oder mehrere in herkömmlicher Weise einsetzbare Karkassen- und/oder Gürtellage(n) herzustellen oder, bei einer bevorzugten Ausführungsform der Erfindung, eine oder mehrere Karkassen- und/oder Gürtellagen direkt beim Aufbau des Reifens zu erstellen.

Wie Fig. 1 zeigt, wird gemäß der gegenständlichen Erfindung ein in Richtung des Pfeiles A ausgeführter Faden 3 durch entsprechende Einrichtungen zu einem Fadengebilde 3a auseinandergezogen. Dazu sind zwei Gurten, Zahnriemen 1 oder dergleichen, insbesondere aus Gummi oder aus einem Kunststoff, vorgesehen, an denen in insbesondere regelmäßigen Abständen eine Vielzahl von Haken 2 befestigt sind. Die gebogenen Endbereiche 2a der Haken 2 weisen jeweils in die gleiche Richtung und aus der Gurtebene heraus.

Der als Festigkeitsträger für eine Verstärkungslage geeignete Faden 3, welcher bei einer Karkassenlage einer der herkömmlichen, textilen Fäden aus Nylon oder Polyester sowie ein Monofilament oder ein Multifilament, wie sie im allgemeinen als Festigkeitsträger in Karkassenlagen Verwendung finden, bei einer Gürtellage ein herkömmlich gestalteter Gürteldraht bzw. Gürtelcord aus Stahl, einem Polyamid oder dergleichen, sein kann, wird als Einzelfaden zugeführt und abwechselnd durch ein hakenartig gebogenes Ende 2a eines Hakens 2 der einen Gurte 1 und eines Hakens 2 der anderen Gurte 1 geführt bzw. von diesen Haken 2 erfaßt. Dies ist aus dem linken Bereich der Fig. 1 ersichtlich. Die beiden Gurten, Zahnriemen 1 oder dergleichen sind über geeignete Führungseinrichtungen, die nicht Gegenstand der vorliegenden Erfindung sind, derart geführt, daß die Haken 2 nacheinander und sukzessive auseinander gezogen werden, bis ein Fadengebilde 3a der gewünschten Breite entsteht.

Das entstehende Fadengebilde 3a besteht somit aus zickzackförmig verlaufenden Fadenabschnitten, wobei bei einem engen Hakenabstand die Fadenabschnitte des Gebildes 3a als nahezu parallel zueinander verlaufend betrachtet werden können.

Zur Herstellung einer Karkassen- oder Gürtellage kann nun, wie Fig. 1 schematisch zeigt, eine hier nur in strichlierten Umrissen eingezeichnete unvulkanisierte Gummiplatte 4 aus einer geeigneten, zur Herstellung von Karkassen- oder Gürtellagen üblichen Kautschukmischung, die beispielsweise eine Stärke von etwa 1 mm besitzt, von oben oder von unten (in Richtung des Pfeiles B) dem Fadengebilde 3a zugeführt werden und mit diesem in Kontakt gebracht werden. Dies erfolgt bevorzugt derart, daß über nicht dargestellte Andrückmittel, die von der anderen Seite her auf das Gebilde 3a wirken, beispielsweise Walzen, Rollen oder dergleichen, ein Andrücken des Fadengebildes 3a auf die Gummiplatte 4 erfolgt. An den Randbereichen werden entweder die Haken 2 ausgefädelt und entfernt, knapp bevor ein Andrücken des Fadengebildes 3a in diesen Bereichen erfolgt oder es wird die Anordnung und Auslegung so getroffen, daß das Fadengebilde 3a breiter ausgeführt ist, als die zugeführte Gummiplatte 4. In diesem Fall können die überstehenden Endbereiche des Fadengebildes 3a abgeschnitten werden, so daß die restlichen Fadenstücke von den Haken 2 fallen und anderweitig Verwendung finden können, beispielsweise zur Faserverstärkung anderer Gummimischungen.

Auf diese Weise entsteht eine einer herkömmlichen rohen Karkassen- oder Gürtellage ähnliche Lage, die bei der üblichen Radialreifenherstellung, beim Aufbau des Reifens auf einer Trommel, eingesetzt werden kann. Dabei kann mit der erfindungsgemäß erstellten Karkassen- oder Gürtellage selbstverständlich eine mehrlagige Karkasse oder ein mehrlagiger Gürtel aufgebaut werden.

Dabei wird eine erfindungsgemäß erstellte Gürtellage nachfolgend in einem Wickelprozeß aufgelegt und auf die richtige Länge geschnitten.

Alternativ zu der in Fig. 1 dargestellten Ausführungsform der Erfindung kann, wie es Fig. 2 schematisch veranschaulicht, ein direktes Aufbringen des Fadengebildes 3a beim Aufbau des Reifens stattfinden. Hier erfolgt der Aufbau des Reifens auf einem torusförmigen, durch eine geteilte Ausführung entfernbaren Formkern 5. Dieser Kern 5 wird zuerst mit der die luftdichte Innenschicht bildenden rohen Gummischichte belegt, auf welche eine weitere rohe Gummischicht, die hier nicht dargestellt ist und für das Anhaften bzw. Einbetten des Fadengebildes 3a vorgesehen ist, aufgebracht ist. Auch diese Gummischicht kann aus einer Kautschukmischung, wie oben erwähnt, bestehen.

Wird mit dem Fadengebilde 3a eine Karkassenlage erstellt, wird das Fadengebilde 3a insbesondere vom Äquator des Kernes 5 aus aufgelegt, wobei im Bereich der späteren Seitenwände des Reifens gleichzeitig der Abstand der Haken 2 in radialer Richtung verringert wird. Dies geschieht durch eine entsprechende Bewegung der Haken in radialer Richtung und unter Spannung. Das Fadengebilde 3a haftet dabei an der Gummischicht, wobei auch hier gesonderte Andrückmittel, wie Rollen oder dergleichen, eingesetzt werden können. Dort, wo die Haken den geringsten radialen Abstand zur Reifendrehachse haben, werden die Haken durch Drehen, Kippen oder Öffnen eines Schließmachanismus entfernt. Die gebildete Karkassenlage kann nun durch das Setzen der Wulstkerne fixiert werden.

Auch das Aufbringen einer Gürtellage ist denkbar einfach, indem das Fadengebilde auf die bombierte Reifenkarkasse aufgelegt und seitlich abgeschnitten wird. Dabei kann auch eine entsprechende Winkelung der Festigkeitsträger zur Umfangsrichtung eingehalten werden.

Auch bei der Ausführungsform gemäß Fig. 2 ist es möglich, durch ein Wiederholen der Schritte des Aufbringens einer rohen Gummilage und des Aufbringens des Fadengebildes 3a eine mehrlagige Karkasse oder einen mehrlagigen Gürtel zu erstellen.

Die Erfindung ist auf die dargestellten und beschriebenen Ausführungsformen nicht eingeschränkt. So ist es beispielsweise möglich, anstelle von Haken Ösen zu verwenden. Auch der gegenseitige Abstand der Haken kann, je nach den Anforderungen, beliebig gewählt werden.

## Patentansprüche

1. Verfahren zur Herstellung einer Verstärkungslage für einen Radialluftreifen, wobei auf eine rohe Gummilage Verstärkungsfäden, die aus einem Einzelfaden gebildet werden, anhaftend aufgebracht werden, dadurch gekennzeichnet, daß der Einzelfaden (3) durch ihn ergreifende Halte- und Führungseinrichtungen in entgegensetzte Richtungen sukzessive auseinandergezogen wird, so daß ein Fadengebilde (3a) aus eng beabstandeten, zickzackförmig verlaufenden Verstärkungsfäden entsteht, welches mit der Gummilage (4) verbunden wird.

2. Verfahren nach Anspruch 1, dadurch gekennzeichnet, daß die Halte- und Führungseinrichtungen zwei Gurten, Riemen (1) oder dergleichen aufweisen, die mit Haken, Ösen (2) oder dergleichen zum Erfassen des Fadens (3) versehen sind.

3. Verfahren nach Anspruch 1 oder 2, dadurch gekennzeichnet, daß die Gummilage (4) dem Fadengebilde (3a) von der einer Seite zugeführt und von der anderen Seite durch Andrückmittel mit diesem verbunden wird.

4. Verfahren, bei dem der Radialreifen auf einem Formkern aufgebaut wird, der als radial äußerste Lage mit einer Gummilage versehen ist, nach Anspruch 1 oder 2, dadurch gekennzeichnet, daß das Fadengebilde (3a) auf die Gummilage, insbesondere unter Spannung, gelegt und angedrückt wird.

5. Verfahren nach einem der Ansprüche 1 bis 4, dadurch gekennzeichnet, daß entweder während oder nach Abschluß des Andrückens bzw. Verbindens des Fadengebildes (3a) mit der Gummilage (4) die Halteeinrichtungen entfernt werden.

6. Verfahren nach einem der Ansprüche 1 bis 4, dadurch gekennzeichnet, daß nach dem Andrücken bzw. Verbinden des Fadengebildes (3a) mit der Gummilage (4) die Ränder des Fadengebildes (3a) abgeschnitten werden.

7. Verstärkungslage für einen Radialluftreifen, hergestellt nach dem Verfahren gemäß zumindest einem der Ansprüche 1 bis 3, 5 oder 6.

8. Verstärkungslage nach Anspruch 7, dadurch gekennzeichnet, dass sie eine Gürtellage oder eine Karkassenlage ist.

9. Radialluftreifen, weicher zumindest eine gemäß zumindest einem der Ansprüche 1 bis 3 sowie 5 oder 6 hergestellte Verstärkungslage aufweist.

10. Radialluftreifen, welcher auf einem Formkern aufgebaut ist und zumindest eine gemäß zumindest einem der Ansprüche 1,2 sowie 4 bis 6 hergestellte Verstärkungslage aufweist.

11. Radialluftreifen nach Anspruch 9 oder 10, dadurch gekennzeichnet, dass die Verstärkungslage eine Gürtellage oder eine Karkassenlage ist.
